# EUROPEAN PATENT APPLICATION

(11) **EP 4 510 158 A1**
(43) Date of publication of application: **19.02.2025**
(21) Application number: 24020258.0
(22) Date of filing: 07.08.2024
(51) Int. Cl.: H01H 3/02, H01H 9/16, H01H 9/28, H01H 13/02

(54) **DEVICE FOR THE EMERGENCY STOP OF AN INDUSTRIAL MACHINE OR PLANT**

(30) Priority: 18.08.2023 IT 202300017382
(71) Applicant: Pizzato Elettrica S.r.l., 36063 Marostica (Vicenza) (IT)
(72) Inventor: Zonta, Simone, 36061 Bassano del Grappa (VI) (IT)
(74) Representative: Dalla Rosa, Silvia

(57) **Abstract**

An emergency stop device 1 for a machine or industrial plant comprises an emergency button 12, a rigid protective element 13 close to the emergency button and light signalling means 17 designed to generate a light signal associated with said protective element 13, wherein the protective element 13 comprises at least one signalling portion 18 which is transparent or translucent with respect to the light signal.

## Description

### Technical Field

The present invention refers to an emergency device adapted to find application in the industrial automation sector, in particular for the emergency stop of hazard operation of a machine or an industrial plant.

### State of the art

In the industrial automation sector, it is known to provide an emergency button close to a machine or plant to allow an operator to stop the hazardous operation of the machine or plant in an emergency situation.

In some cases, for example in large industrial plants such as process lines for producing steel, aluminum, food, rubber, and more, or in large vehicles or machinery, or more, it is known to provide more than one emergency button along the extension of the industrial plant or machine to allow an operator to stop the plant or machine quickly from any position.

In this context, known emergency buttons have some drawbacks and inconveniences. A first drawback is that it can be difficult for the operator to quickly locate the nearest emergency button in case of emergency, especially if the plant or machine is very large and complex and/or if the environment in which it operates is characterized by poor visibility, obstacles or other.

Emergency devices are also known, for example of the type described in DE4341501, which comprise a mushroom-shaped emergency button having a green portion and a red portion that is movable with respect to the green portion. When the emergency button is not pressed, the green portion and the red portion are both visible, while when the emergency button is pressed, the red portion covers the green portion, making the pressed state of the button visible. DE4341501 also describes a protective guard to protect the emergency button, which comprises a transparent portion from which it is possible to see the green and/or red coloured portions of the emergency button to distinguish whether it is pressed or not.

DE4341501 also describes that the emergency button can be illuminated in green or red by two lamps, to distinguish whether it is pressed or not.

A second drawback, partly opposite to the first, consists in the fact that, in order to restart the machine or plant after having pressed an emergency button, it may be difficult to identify which emergency button was previously pressed, so to reset it. This drawback is also typical in the case of machines or plants with a large number of emergency buttons and/or when the plant or machine is very large and complex and/or if the work environment is characterized by poor visibility, obstacles or other.

There is therefore a need to create an emergency button that can overcome the drawbacks of the known art.

### Scope of the invention

In particular, an object of the present invention is to provide an emergency device that can be easily located by an operator in the event of an emergency.

Another object of the present invention is to provide an emergency device that can be easily located after it has been pressed in an emergency situation.

A further object of the present invention is to provide an emergency device that can prevent accidental or unintentional activation.

Another object of the present invention is to provide an emergency device that is economical and simple to produce industrially.

### Brief disclosure of the drawings

Figs. 1, 5 and 6 are schematic axonometric views of a safety device in accordance with respective embodiments of the present invention;
Figs. 2 and 3 are schematic sections of the safety device of Fig. 1;
Figs. 4 and 5 are schematic sections of the safety device of Fig. 6;
Fig. 8 is a simplified electrical diagram of the safety device of the present invention.

### Summary of the invention

The present invention relates to a device for the emergency stop of a machine or an industrial plant comprising:
- an emergency button designed to undergo to a rest state wherein it allows the operation of the machine or industrial plant and an operated state wherein it stops or does not allow the operation of the machine or industrial plant, and having an actuation element defining an actuation axis along which it is suitable to be pressed and designed to operate a switching member adapted to be connected to an external circuit of the machine or industrial plant; and
- a rigid protection element close to the actuation element.

According to an aspect of the present invention, the emergency device also comprises light signalling means designed to generate a light signal and associated with the protection element. Furthermore, the protection element comprises at least one signalling portion at least partially transparent or translucent with respect to the light signal.

According to other embodiments, the safety device comprises a power supply and control circuit for the light signalling means designed, or adapted to be designed, to modify the properties of the light signal as a function of the state of the emergency button or of the machine.

The properties of said light signal are selected from a group comprising the flashing frequency, the colour and the light intensity of the light signal.

According to other embodiments, the device further comprises a case containing the switching member and which is provided with a wall which the actuating element is fixed to.

According to other embodiments, the protection element is made as one piece with the wall and the light signalling means are contained inside the case.

According to other embodiments, the wall of the case is also transparent or translucent with respect to the light signal.

According to other embodiments, the light signalling means are contained inside the case and the protection element is fixed to the wall at an opening made in the wall and aligned with the light signalling means.

According to other embodiments, the protection element is fixed to the wall and the light signalling means are integrated into the protection element.

According to other embodiments, the power supply and control circuit comprises at least two different portions, each of which, when powered, is designed to cause the light signalling means to generate a respective light signal with respective properties; and one or more auxiliary switching elements, each of which is associated with the actuation element to be actuated thereby and is designed to be connected to a power source and to one of the two portions to power it or not depending on the state of the emergency button.

According to other embodiments, the power supply and control circuit is of the digital type and comprises a sensor of the state of the emergency button and an electronic control unit connected to the sensor and to said light signalling means designed to control the operation thereof depending on the state of the emergency button. According to other embodiments, the device also comprises audible signalling means arranged inside the case and connected to said power supply and control circuit. The power supply and control circuit is designed, or adapted to be designed, also to modify the properties of the audible signal depending on the state of the emergency button. According to other embodiments, the device comprises an electronic control unit connected to the light signalling means and suitable to be connected to an external device to receive an external signal and to modify the properties of the light signal as a function of said external signal.

### Best modes of carrying out the invention

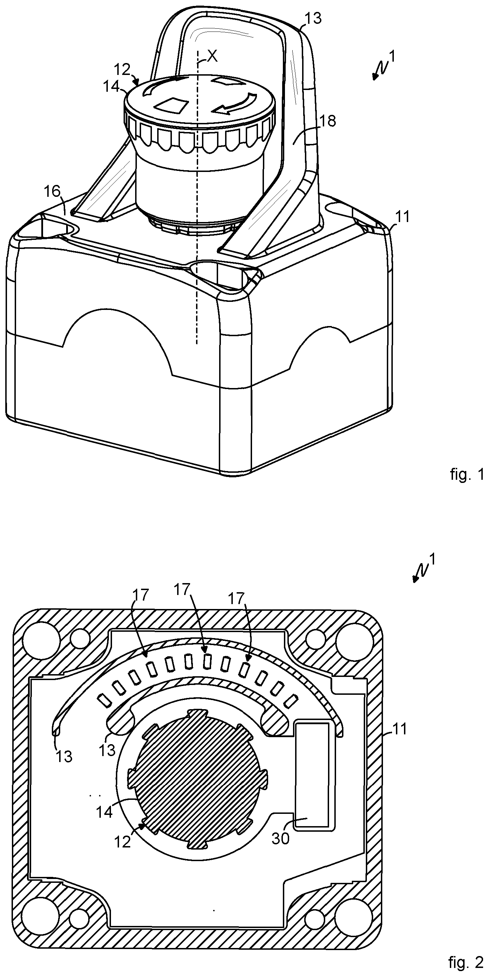

With reference to **Fig. 1****,** a device for the emergency stop of an industrial machine or plant according to the present invention, hereinafter only emergency device **1,** comprises a case **11,** an emergency button **12** fixed to the case **11** and a protection element **13** associated with the emergency button **12.**

The case **11** comprises the protection element **13** and at least one wall **16.**

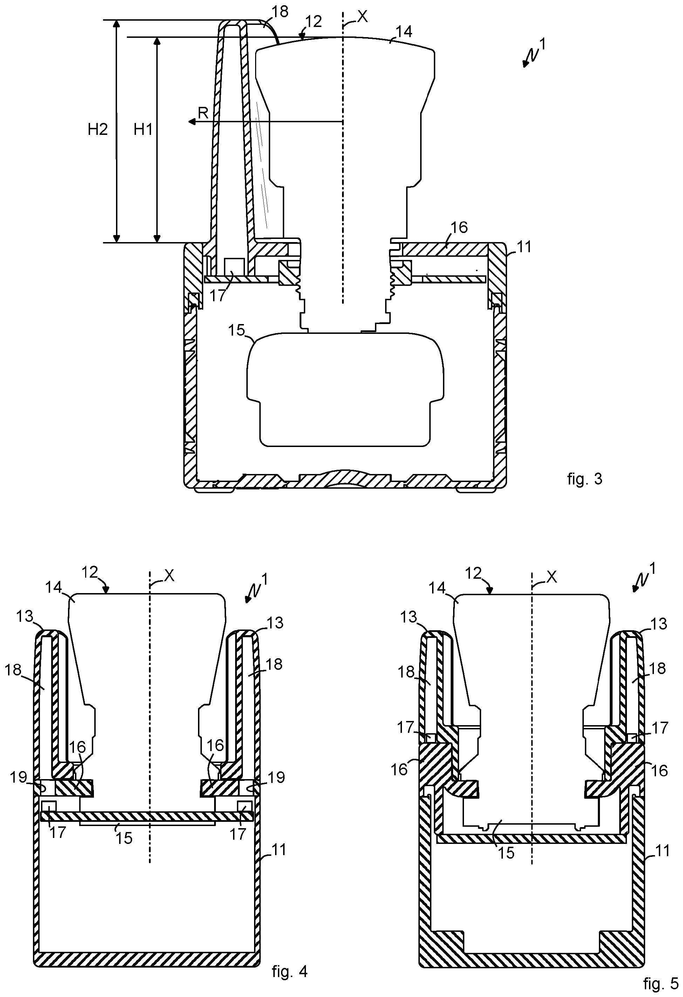

The emergency button **12** comprises an actuation element **14** fixed to a wall **16** of the case **11** which is movable along an actuation axis **X** to be pressed by an operator. Furthermore, the emergency button **12** also comprises a switching member **15** (**Fig. 3**) contained in the case **11** and mechanically connected to the actuation element **14.** In particular, the switching member **15** is designed to be connected to an external circuit of an industrial machine or plant to switch the latter in response to a pressure on the actuation element **14** by an operator. The external circuit can be connected, for example, to a safety PLC, a safety module or a contactor connected to the power supply of the machine or industrial plant. Furthermore, preferably but not necessarily, the switching element **15** is of the dual-channel type comprising two mechanical contact units. Alternatively, the switching element **15** is of the dual-channel electronic type comprising two OSSDs (*Output Signal Switching Devices*). In turn, the switching element **15** may be connected to an industrial communication bus to connect the emergency device **1** to a PLC of the machine or other external device.

The emergency button **12** may undergo to a rest state wherein the actuation element **14** is in a rest position and is not pressed and the switching element **15** allows the operation of the machine or industrial plant. Furthermore, the emergency button **12** may undergo to an operated state wherein the actuation element **14** has been pressed into an emergency position and the switching element **15** does not allow or stops the operation of the machine or industrial plant.

The transition from the rest state to the operated state occurs by pressing the actuation element **14** by an operator, while the return to the rest state from the operated state occurs by restoring the rest position of the actuation element **14** by an operator. For example, the rest position of the actuation element **14** is restored by rotating or pulling it by an operator.

However, the actuation element **14** and the switching element **15** may be of any other known type without thereby departing from the scope of protection of the present invention.

The protection element **13** is suitable for protecting the actuation element **14** of the emergency button **12** from accidental actuations or pressures caused by involuntary impacts or hits by an operator or by moving objects.

Preferably, the protection element **13** develops substantially parallel to said actuation axis **X,** overlapping at least partially the actuation element **14** along at least one radial direction **R** having its center at a point of said actuation axis **X.**

In other words, the protection element **13** surrounds the drive element **14** at least partially.

In this case, the protection element **13** comprises a rigid body close to the actuation element **14,** for example at least partially surrounding the actuation element **14** around the actuation axis **X,** and which extends towards the outside of the case **11** at least partially in a direction substantially parallel to the actuation axis **X.** In this way, the protection element **13** overlaps the actuation element **14** in at least one radial direction **R** having as its centre a point contained on the actuation axis **X.**

It should be noted that the protection element **13** may have any shape suitable for protecting the actuation element **14.** For example, it may have a circular, partially circular, square plan shape, or defined by any combination of straight and/or curved sections.

When the actuation element **14** is in the rest state it protrudes by a first height **H1** from the wall **16** towards the outside of the case **11** and the protection element **13** projects with a second height **H2** from the wall **16** towards the outside of the case **11.** Preferably, the second height **H2** is at least equal to 50% of the first height **H1.** Even more preferably, the second height **H2** is at least equal to 80% of the first height **H1.** In the embodiments shown in the attached figures, the second height **H2** is greater than the first height **H1.**

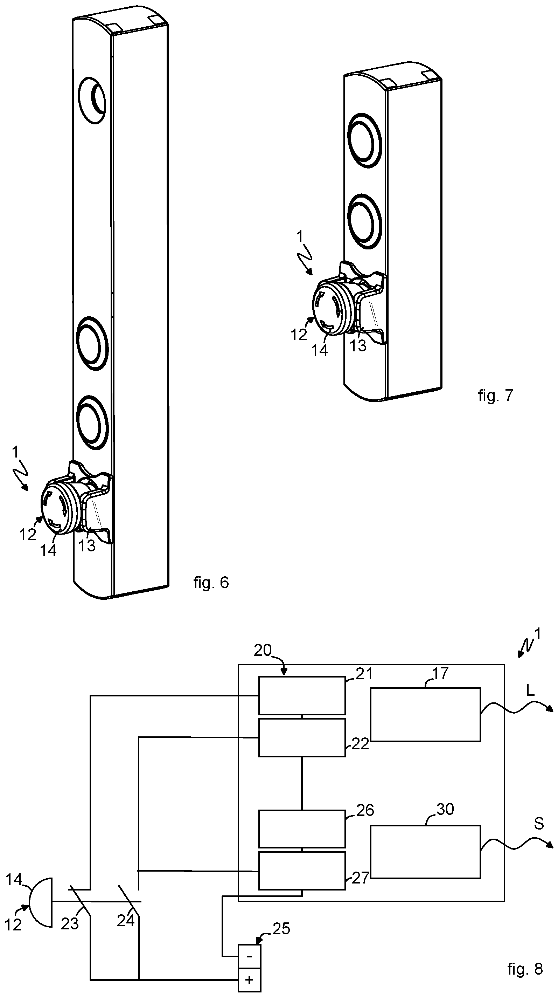

According to an aspect of the present invention, the emergency device **1** also comprises light signalling means **17** (**Figs. 2 to 5**) associated with the protection element **13** and designed to generate a light signal **L** (**Fig. 8**). Moreover, the protection element **13** comprises at least one signalling portion **18** (**Fig. 1**) which is at least partially transparent or translucent with respect to the light signal **L.** Preferably, the signalling portion **18** is at least partly transparent or translucent to natural light.

The case **11** contains the light signalling means **17.**

The light signalling means **17** are at least partially superimposed on the protection element **13** so that the light signal **L** may pass through the signalling portion **18** and be visible from the outside.

In this case, the light signalling means **17** comprise a plurality of LEDs arranged underneath the signalling portion **18** of the protection element **13,** towards the inside of the case **11.**

The surface of the signalling portion **18** is preferably at least 50% of the entire external surface of the protection element **13.** Even more preferably, the signalling portion **18** corresponds to the entire protection element **13.** In this case the entire protection element **13** is transparent or translucent with respect to the light signal **L.**

In one embodiment, schematically represented in **Fig. 4****,** the light signalling means **17** are contained in the case **11** and the protection element **13** is fixed to the wall **16.** In this embodiment, the wall **16** is opaque with respect to the light signal **L** and comprises an opening **19** interposed between the light signalling means **17** and the protection element **13.**

In another embodiment, schematically represented in **Fig. 5****,** the protection element **13** is fixed to the wall **16** and the light signalling means **17** are contained inside the protection element **13.**

In a further preferred embodiment, schematically represented in **Fig. 1** and **3****,** the light signalling means **17** are contained in the case **11** and the protection element **13** is made as a one piece with the wall **16** without interruption. Preferably, in this embodiment, the protection element **13** and the wall **16** are entirely transparent or translucent with respect to the light signal **L.**

The light signalling means **17** are connected to a power supply and control circuit **20** designed, or adapted to be designed, to activate or deactivate the light signal **L** and to modify the properties of the light signal **L** depending on the state of the emergency button **12.** Alternatively, or in addition, the power supply and control circuit **20** is designed, or adapted to be designed, to activate or deactivate the light signal **L** and to modify the properties of the light signal **L** depending on the state of the machine or components thereof.

By way of example, the modifiable properties of the light signal **L** may be selected between the flashing frequency, the color, the light intensity and others.

For example, when the emergency button **12** is in the rest state, i.e. when the actuation element **14** is not pressed, the light signalling means **17** may emit a continuous light signal **L** and when the emergency button **12** switches to the operated state, i.e. when the actuation element **14** is pressed, the light signalling means **17** generates an intermittent light signal **L,** or vice versa. Alternatively, when the emergency button **12** is in the rest state, the light signalling means **17** may emit a continuous or intermittent light signal **L** and when the emergency button **12** switches to the operated state, the light signalling means **17** remains off without generating any light signal **L,** or vice versa. Alternatively, a first colour, or a first level of light intensity of the light signal **L** may be associated with one state of the emergency button **12** and a second colour or a second level of light intensity of the light signal **L** may be assigned to the other state of the emergency button **12,** which is different from the first colour or the first level of light intensity, respectively.

In this way, on the one hand, it is easier for an operator in an emergency situation to locate the nearest emergency device **1** and, on the other hand, it also facilitates and speeds up the search for the specific operated emergency device **1** when it is necessary to restart the stopped machine or plant. This is very advantageous especially for industrial machines or plants wherein there is more than one emergency device **1.**

In another embodiment, the light signal **L** is activated when the machine is on and the light signal **L** is turned off when the machine is off, or vice versa, or to indicate any other state or operating cycle of the machine.

Optionally, the emergency device **1** also comprises audible signal means **30** (**Figs. 2** **and** **8**) arranged inside the case **11** and designed, or adapted to be designed, to generate an audible signal **S** depending on the state of the emergency button **12.** By way of example, the audible signal means **30** comprise a buzzer, a loudspeaker or any other sound source.

The audible signal means **30** are also connected to the power supply and control circuit **20** which is designed, or adapted to be designed, also to activate or deactivate the audible signal **S** and to modify the properties of the audible signal **S** depending on the state of the emergency button **12** or of the machine.

By way of example, the modifiable properties of the audible signal **S** may be selected between the frequency, the volume and others.

For example, when the emergency button **12** is in the rest state, the audible signal means **30** remain off without generating any audible signal **S** and when the emergency button **12** switches to the operated state, the audible signal means **30** generate a continuous or intermittent audible signal **S,** or vice versa.

Alternatively, or in addition, the power supply and control circuit **20** is designed, or adapted to be designed, to activate or deactivate the audible signal **S** and to modify the properties of the audible signal **S** depending on the state of the machine or its components.

In one embodiment, the power supply and control circuit **20** is of the analog type and comprises at least two different portions **21, 22** (**Fig. 8**), each of which, when powered, is suitable to cause the light signal means **17** to generate a respective light signal **L** with respective properties. Moreover, the power supply and control circuit **20** comprises one or more auxiliary switching members **23, 24** associated with the actuation element **14** to be operated thereby and suitable to be connected to a power source **25** and to at least one of said two portions **21, 22** to power one or the other depending on the state of said emergency button **12.**

For example, the power supply and control circuit **20** comprises a first portion **21** which, when powered, is suitable to cause the light signalling means **17** to generate a continuous light signal **L.** Moreover, the power supply and control circuit **20** also comprises a second portion **22** which, when powered, is suitable to cause the light signalling means **17** to generate an intermittent light signal **L.**

The auxiliary switching devices **23, 24** may be of the normally open or normally closed type and may be connected to the continuous light signal portion **21** and/or to the intermittent light signal portion **22** so as to obtain a specific desired behavior of the emergency device **1.**

Preferably, each portion **21, 22** is associated with reversible connection means (not shown, such as terminal blocks) of each portion **21, 22** to the auxiliary switching devices **23, 24.** This is advantageous because it allows the operator who installs the emergency device **1** of the present invention to set the desired light signalling effect. By way of example, a normally closed auxiliary switching member **23** may be connected to the continuous light signal portion **21** and a normally open auxiliary switching member **24** may be connected to the intermittent light signal portion **22** so that the light signalling means **17** emit a continuous light signal **L** when the emergency button **12** is in the rest state and an intermittent light signal when the emergency button **12** is in the operated state. The skilled person in the art will readily understand that the auxiliary switching members **23, 24** may be of any known type or combination and arbitrarily connectable to the continuous light signal portion **21** and/or to the intermittent light signal portion **22** or only to one of the same to obtain the desired light signalling effect.

Optionally, the power supply and control circuit **20** comprises a third portion **26** which, when powered, is suitable to cause the audible signalling means **30** to generate a continuous audible signal **S.** Moreover, the power supply and control circuit **20** also comprises a fourth portion **27** which, when powered, is suitable to cause the audible signalling means **30** to generate an intermittent audible signal **S.**

In this case, the auxiliary switching members **23, 24** are also designed to be connected to the continuous audible signal portion **26** and/or to the intermittent audible signal portion **27.**

By way of example, a normally open auxiliary switching member **24** may be connected to the intermittent or continuous audible signal portion **26 or 27** so that the audible signalling means **20** emit a continuous or intermittent signal when the emergency button **12** is in the operated state. Furthermore, the person skilled in the art will easily understand that the auxiliary switching devices **23, 24** may be of any known type or combination and may be connected arbitrarily to the continuous audible signal portion **26** and/or to the intermittent audible signal portion **27** or only to one of the same to obtain the desired audible signalling effect.

In another embodiment, not shown in the attached figures, the power and control circuit **20** may be of the digital type and comprise a sensor for detecting whether the actuation element **14** is in the rest state or in the operated state and a programmable electronic control unit connected to the sensor and to the light signalling means **17** to control them according to the state of the actuation element **14.** Optionally, in these embodiments, the control unit may also be connected to the audible signalling means **30** to control them according to the state of the actuation element **14.**

Optionally, in these embodiments, the control unit may be connected to external devices by means of an industrial communication protocol or BUS (IO-Link, ProfiNET, ProfiSafe, or others) to receive an external signal encoding the desired properties of the light signal **L** and/or the audible signal **S.** In this case, the control unit is designed to control the light signalling means **17** and/or the audible signalling means **30** as a function of said external signal encoding the desired properties of the light signal **L** and/or the audible signal **S.**

Alternatively, or in addition, the control unit may control the operation of the light signalling means **17** and/or the audible signalling means **30** as a function of said external signal.

For example, said external signal may modify the properties of the light signal **L** and/or the audible signal **S** as a function of the operating states of the machine or industrial plant or of something else. Alternatively, the switching member **15** may be connected to an external device, i.e. to the machine, and the latter may transmit an external signal to modify the properties of the light signal **L** and/or the audible signal **S** as a function of the state of the emergency button **12.**

The emergency device **1** of the present invention may be integrated into any known industrial automation device and, in these cases, the case **11** may also comprise the elements of the industrial automation device in which the emergency device **1** is integrated.

For example, in one embodiment shown as an example in **Fig. 6**, the emergency device **1** of the present invention is integrated into a safety switch for movable guards. Alternatively, in another embodiment shown as an example in **Fig. 7****,** the emergency device **1** of the present invention is integrated into a button panel with other buttons, for example two other buttons.

## Claims

1. Device (**1**) for the emergency stop of a machine or industrial plant comprising:
- an emergency button (**12**) designed to undergo to a rest state wherein it allows the operation of said machine or industrial plant and an operated state wherein it stops or does not allow the operation of said machine or industrial plant, and having an actuation element (**14**) defining an actuation axis (**X**) along which it is suitable to be pressed and designed to actuate a switching member (**15**) suitable to be connected to an external circuit of said machine or industrial plant;
- a rigid protection element (**13**) close to said operation element (**14**);
**characterized by** comprising light signalling means (**17**) designed to generate a light signal (**L**) and associated with said protection element (**13**) and **in that** said protection element (**13**) comprises at least one signalling portion (**18**) at least partially transparent or translucent with respect to said light signal (**L**).

2. Device (**1**) as in claim 1, **characterized by** comprising a case (**11**) provided with a wall (**16**) which said actuation element (**14**) is fixed to.

3. Device (**1**) as in claim 2, **characterized in that** said case (**11**) also comprises said protection element (**13**) and contains said light signalling means (**17**) and said switching member (**15**).

4. Device (**1**) as in claim 3, **characterized in that** said protection element (**13**) is fixed or made as one piece with said wall (**16**) and **in that** said light signalling means (**17**) are contained inside said case (**11**).

5. Device (**1**) as in any preceding claim, **characterized in that** said protection element (**13**) develops substantially parallel to said actuation axis (**X**) overlapping at least partially with the drive element (**14**) along at least one radial direction (**R**) having a point of said actuation axis (**X**) as the center.

6. Device (**1**) as in any claim from 1 to 5, **characterized by** comprising a power supply and control circuit (**20**) of said light signalling means (**17**) designed, or adapted to be designed, to modify the properties of said light signal (**L**) as a function of the state of said emergency button (**12**) or of the machine.

7. Device (**1**) as in claim 6, **characterized in that** said properties of said light signal (**L**) are selected from a group comprising the flashing frequency, the colour and the light intensity of said light signal (**L**).

8. Device (**1**) as in any claim from 2 to 7, **characterized in that** said protection element (**13**) is made in one piece with said wall (**16**) and said light signalling means (**17**) are contained inside said case (**11**).

9. Device (**1**) as in any claim from 2 to 8, **characterized in that** said wall (**16**) is also transparent or translucent with respect to said light signal (**L**).

10. Device (**1**) as in any claim from 2 to 7, **characterized in that** said light signalling means (**17**) are contained inside said case (**11**) and said protection element (**13**) is fixed to said wall (**16**) at an opening (**19**) made on said wall (**16**) and aligned with said light signalling means (**17**).

11. Device (**1**) as in any claim from 2 to 7, **characterized in that** said protection element (**13**) is fixed to said wall (**16**) and said light signalling means (**17**) are integrated into said protection element (**13**).

12. Device (**1**) as in any claim from 5 to 11, **characterized in that** said power supply and control circuit (**20**) comprises at least two different portions (**21, 22**), each of which, when powered, is suitable to cause said light signalling means (**17**) to generate a respective light signal (**L**) with respective properties; and
one or more auxiliary switching members (**23, 24**) each of which is associated with the actuation element (**14**) to be actuated thereby and is designed to be connected to a power source (**25**) and to one of said two portions (**21, 22**) to power it or not depending on the state of said emergency button (**12**).

13. Device (**1**) as in any claim from 5 to 11, **characterized in that** said power supply and control circuit (**20**) is of the digital type and comprises a sensor of the state of said emergency button (**12**) and an electronic control unit connected to said sensor and to said light signalling means (**17**) designed to control the operation thereof as a function of the state of said emergency button (**12**).

14. Device (**1**) as in any preceding claim, **characterized in that** it also comprises audible signalling means (**30**) arranged inside said case (**11**) and connected to said power supply and control circuit (**20**) to generate an audible signal (**S**), wherein said power supply and control circuit (**20**) is designed, or adapted to be designed, also to modify the properties of said audible signal (**S**) as a function of the state of said emergency button (**12**).

15. Device (**1**) as in any preceding claim, **characterized by** comprising an electronic control unit connected to said light signalling means (**17**) and suitable to be connected to an external device to receive an external signal and to modify the properties of said light signal (**L**) as a function of said external signal.
